# EUROPEAN PATENT SPECIFICATION

(11) **EP 1 528 854 B1**
(45) Date of publication and mention of the grant of the patent: **22.11.2006**
(21) Application number: 03764950.6
(22) Date of filing: 08.07.2003
(51) Int. Cl.: A01K 1/015

(54) **CAT LAVATORY COMPRISING AN URINE TEST**
KATZENTOILETTE AUSGESTATTET MIT EINEM URINTEST
TOILETTE POUR CHATS COMPRENANT UN TEST D'URINE

(30) Priority: 19.07.2002 DE 10232905
(43) Date of publication of application: 11.05.2005
(73) Proprietor: Mars Incorporated, McLean, Virginia 22101-3883 (US)
(72) Inventor: GUNNAR, Wenzel, 56237 Breitenau (DE)
(74) Representative: Winkler, Andreas Fritz Ernst
(86) International application number: PCT/EP2003/007296
(87) International publication number: WO 2004/008843

(56) References cited:
- WO-A-88/00434
- WO-A-02/071837
- US-A- 3 978 818
- US-A- 5 347 950
- US-A- 5 780 385

## Description

The present invention relates to a cat lavatory comprising at least one absorbent material comprising an insert of non-woven material, characterised by having at least one indicator strip for determining a cat's urine levels, which is arranged on and/or in the absorbent material, and a method of determining a cat's urine levels using the same.

Cat lavatories are sufficiently well-known in the art. Conventional cat lavatories usually consist of a tray-like lower part, which is typically filled with absorbent material, especially cat litter. Some or all of the absorbent material must be removed from the lower part at regular intervals and replaced with new material. In addition, it is necessary, for reasons of hygiene, also to clean the lower part at regular intervals.

Disposable cat lavatories are also known from the prior art, in which, for example, a bag filled with cat litter is placed in the lower part, the bag being sealed after use and disposed of in its entirety.

WO-A-02 071837 for example, teaches a cat lavatory consisting of a soft disposable pack made of a flexible material with a receptacle space closed on all sides and containing a filling of hygienic litter, wherein the space can be torn open at the top in order for the pack to be used, after use, the pack containing the litter material can be disposed of in a sealed condition.

The sole function of all the cat lavatories known from the prior art, however, is to take up the cat's faeces and urine in a highly absorbent manner and to bind the odours.

In many cases, however, there is an interest, especially if the cat is ill, in checking a cat's true state of health. Apart from examining its blood count, this can be done above all by determining urine levels, such as the sugar content or any possible blood content in the urine. Appropriate test strips for examining selected urine levels are known for human use. It would, however, appear that a corresponding use in a cat is difficult and, in particular, it would inevitably involve the need for the cat owner using it to come into contact with the soiled lavatory, which is unhygienic and undesirable.

US 5,780,385 discloses a cat lavatory comprising at least one absorbent material comprising an insert of non-woven material, having at least one indicator strip for determining a cat's sugar level or blood content level in the urine, which is arranged in the absorbent material.

US 3,978,818 discloses a litter package comprising a container of transparent waterproof material, a body of litter within the container for use by a pet animal after the package has been opened to expose the litter with the litter covering the bottom of the container when disposed for use, said body consisting of absorbent particles which are chemically neutral when wet and testing means within the container and of an indicator type changing colour if wetted by urine, containing a particular colour-changing reactant indicative of an unfavorable current health condition of the animal.

The object of the present invention is therefore to achieve a further development of the generic cat lavatory such that the disadvantages of the prior art are overcome, and in particular that it becomes possible to determine the cat's urine levels in a hygienic and simple manner.

In addition, a further object of the invention consists in providing a method of determining a cat's urine levels using the cat lavatory of the invention.

The first object is achieved in that the indicator strip comprises at least one indicator field and a region for the user to handle the indicator strip and the indicator field, in the condition in which it is delivered to the consumer, is arranged within a protective cover

In a preferred embodiment of the invention, the cat lavatory consists of a container with a peripheral side wall, which is sealed on all sides in the condition in which it is delivered to the consumer, and which contains absorbent material, and which is designed in such a way that it is opened before use and is disposed of in its entirety after use.

In addition, by way of alternative, the cat lavatory can consist of a lower part and a replaceable pouch containing the absorbent material, which can be placed in the lower part.

It is further preferred for the insert of non-woven material to comprise a super-absorber and a scratch-proof layer of non-woven material disposed on top of the super-absorber.

Furthermore, a layer of litter can be disposed above the scratch-proof layer of non-woven material.

In a further preferred embodiment of the invention, the indicator strip is disposed between the super-absorber and the scratch-proof layer of non-woven material.

In addition, it can be provided for the indicator field to comprise at least one indicator point.

It is especially preferred for the protective cover to be made substantially from water-proof plastic material and to be attached on and/or in the absorbent material.

The protective cover is preferably attached on and/or in the absorbent material with spots of adhesive.

Preferably, the indicator strip is substantially made from water-proof plastic material.

In addition, the indicator strip can be fixed to the absorbent material with at least one further attachment means.

In accordance with the invention, the indicator strip can be activated by pulling it out over the absorbent material.

In a preferred embodiment of the invention, the indicator field is disposed on the side of the indicator strip facing the super-absorber.

The method object of the invention is achieved by the fact that, in order to activate the indicator strip, it is drawn over the insert of non-woven material, especially the super-absorber.

In one embodiment, the indicator strip can be used to determine urine levels, such as sugar and blood contents and the like.

The present invention is thus based on the surprising finding that, by arranging an indicator strip on and/or in the absorbent material of the cat lavatory, a diagnostic function is provided which makes it possible to check certain urine levels in a cat in a simple and hygienic manner. A particular advantage of the cat lavatory of the invention is that it is not necessary for the user to come into contact with the soiled lavatory in order to perform measurements.

Further features and advantages of the present invention will become apparent from the following description, in which a preferred embodiment of the cat lavatory of the invention will be described with reference to schematic drawings, in which
Fig. 1 shows a schematic view of a section of a cat lavatory in accordance with the invention; and
Fig. 2 shows a perspective view of a cat lavatory in accordance with the invention.

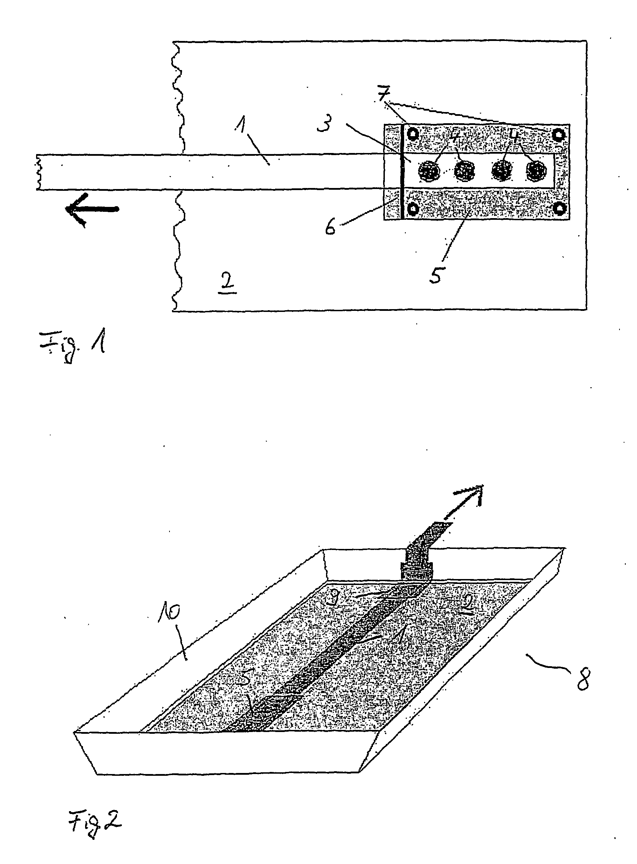

Fig. 1 shows an indicator strip 1 disposed on and/or in absorbent material 2, which consists in particular of a super-absorber and an insert of non-woven material. The indicator strip 1 comprises an indicator field 3, which consists of four indicator points 4. It goes without saying that the indicator region can also comprise one single large field or some other number of indicator points 4. In the condition in which it is delivered to the consumer, the indicator field 3 of the indicator strip 1 is disposed, as shown in Figure 1, within a protective cover 5 which seals off the indicator field 3 from the absorbent material 2 with a seal 6. Like the indicator strip 1, the protective cover 5 is preferably made from a plastic material, and most preferably from a water-proof plastic material. The protective cover 5 is attached to the absorbent material 2, especially the layer of non-woven material, with adhesive points 7, for example.

Fig. 2 shows a preferred embodiment of the cat lavatory in accordance with the invention, in a perspective view. As can be seen, the indicator strip 1 is placed centrally in a cat lavatory 8. It goes without saying for a man skilled in this art that different arrangements of the indicator strip 1 and also that a plurality of indicator strips can be used. At a position spaced apart from the protective cover 5 of the indicator field 3, the indicator strip 1 shown in Fig. 2 is provided with an additional attachment 9, which ensures that the indicator strip 1 remains stably in position and which prevents the indicator strip 1 from slipping out of position and possible being rendered unusable when the cat lavatory 8 is used, such as if the cat scratches it with its paws. As can be seen from Fig. 2, the indicator strip 1 is slipped movably through the attachment 9, so that it can be drawn out in the direction of the arrow.

According to Fig. 2, the indicator strip 1 is disposed in a cat lavatory 8, which comprises a container with a peripheral side wall 10. This cat lavatory 8 can be a conventional cat lavatory, it then only being necessary to replace absorbent material 2 from time to time.

Similarly, the cat lavatory 8 shown in Fig. 2 can also be a disposable cat lavatory, which, in the condition in which it is delivered to the consumer, is sealed on all sides, is optionally folded, and which contains absorbent material 2, and is designed in such a way that the container is opened before use and is disposed of in its entirety after use.

It is also conceivable that only a replaceable pouch, which can be placed in the lower part, might be placed in the lower part, it being possible for a suitable indicator strip 1 to be located on said pouch.

It goes without saying that the cat lavatory 8 of the invention can also be provided with a corresponding top part (not shown), in order where appropriate to stabilise the cat lavatory 8 or corresponding inserts, such as disposable lavatories. In the case of disposable lavatories, it is also possible for sealing means to be provided for sealing the disposable lavatory after use.

The indicator strip 1 which is shown in Figs. 1 and 2 is now used in such a way as to be able to read off the corresponding urine levels by pulling out the indicator strip 1 in the direction of the arrows shown in Figs. 1 and 2 and/or drawing it over the absorbent material 2, especially the super-absorber, which in effect serves as a urine collector. In the process, first of all the seal 6 is broken open, and the indicator points 4 then come into direct contact with the urine absorbed in the absorbent material 2. If the absorbent material 2 comprises a scratch-proof layer of non-woven material, this has the additional advantage that inaccurate displays, which might occur as a consequence of possible contact with cat litter, are minimised or avoided. When the user pulls the indicator strip 1 out of the cat lavatory 8 completely, it is possible in this way to read off the urine levels found in a simple and hygienic manner.

The cat lavatory of the invention is particularly suitable for determining the sugar level, blood content and the like in the urine.

It goes without saying that a lavatory according to the invention can be used not only for cats, but also for dogs and other small animals.

## Claims

1. A cat lavatory (8), comprising at least one absorbent material (2) comprising an insert of non-woven material, and at least one indicator strip (1) for determining a cat's urine levels, which is arranged on and/or in the absorbent material (2), **characterized in that** the indicator strip (1) comprises at least one indicator field (3) and a region for the user to handle the indicator strip (1) and the indicator field (3), in the condition in which it is delivered to the consumer, is arranged within a protective cover (5).

2. The cat lavatory as claimed in Claim 1, **characterised in that** the cat lavatory (8) consists of a container with a peripheral side wall (10), which is sealed on all sides in the condition in which it is delivered to the consumer, and which contains absorbent material (2), and which is designed in such a way that it is opened before use and is disposed of in its entirety after use.

3. The cat lavatory as claimed in Claim 2, **characterised in that** the container is a folded pack.

4. The cat lavatory as claimed in Claim 1, **characterised by** having a lower part and a replaceable pouch containing the absorbent material (2), which can be placed in the lower part.

5. A cat lavatory as claimed in any of the preceding claims, **characterised in that** the insert of non-woven material comprises a super-absorber and a scratch-proof layer of non-woven material disposed on top of the super-absorber.

6. The cat lavatory as claimed in Claim 5, **characterised in that** a layer of litter is disposed above the scratch-proof layer of non-woven material.

7. The cat lavatory as claimed in either of Claims 5 or 6, **characterised in that** the indicator strip (1) is disposed between the super-absorber and the scratch-proof layer of non-woven material.

8. The cat lavatory as claimed in any of the preceding claims, **characterised in that** the indicator field (3) comprises at least one indicator point (4).

9. The cat lavatory as claimed in any of the preceding claims, **characterised in that** the protective cover (5) is made substantially from water-proof plastic material and is attached on and/or in the absorbent material (2).

10. The cat lavatory as claimed in Claim 9, **characterised in that** the protective cover is attached on and/or in the absorbent material with spots of adhesive (7).

11. A cat lavatory as claimed in any of the preceding claims, **characterised in that** the indicator strip (1) is substantially made from water-proof plastic material.

12. A cat lavatory as claimed in any of the preceding claims, **characterised in that** the indicator strip (1) is fixed to the absorbent material (2) with at least one further attachment means (9).

13. A cat lavatory as claimed in any of the preceding claims, **characterised in that** the indicator strip (1) can be activated by pulling it out over the absorbent material (2).

14. A cat lavatory as claimed in any of the preceding claims, **characterised in that** the indicator field (3) is disposed on the side of the indicator strip (1) facing the super-absorber.

15. A method of determining a cat's urine levels using a cat lavatory as claimed in any of Claims 1 to 14, **characterised in that** in order to activate the indicator strip (1), it is drawn over the insert of non-woven material, especially the super-absorber.

16. The method as claimed in Claim 15, **characterised in that** the indicator strip (1) is used to determine urine levels, such as sugar and blood contents and the like.

## Patentansprüche

1. Katzentoilette (8), umfassend zumindest ein absorptionsfähiges Material (2), das eine Vlieseinlage und zumindest einen Indikatorstreifen (1) zum Bestimmen von Urinwerten einer Katze, der an und/oder in dem absorptionsfähigen Material (2) angeordnet ist, umfaßt, **dadurch gekennzeichnet, daß** der Indikatorstreifen (1) mindestens ein Indikatorfeld (3) und einen Bereich zum Handhaben des Indikatorstreifens (1) durch den Verwender umfaßt und das Indikatorfeld (3) im Anlieferungszustand beim Verbraucher in einer Schutzhülle (5) angeordnet ist.

2. Katzentoilette nach Anspruch 1, **dadurch gekennzeichnet, daß** die Katzentoilette (8) aus einem Behältnis mit einer umlaufenden Seitenwand (10) besteht, das im Anlieferungszustand beim Verbraucher allseitig verschlossen ist und das absorptionsfähige Material (2) enthält, und das so ausgelegt ist, daß es vor Gebrauch geöffnet und nach Gebrauch insgesamt entsorgt wird.

3. Katzentoilette nach Anspruch 2, **dadurch gekennzeichnet, daß** das Behältnis eine Faltverpackung ist.

4. Katzentoilette nach Anspruch 1, **gekennzeichnet durch** ein Unterteil und einen in das Unterteil einlegbaren auswechselbaren Schlauchbeutel, der das absorptionsfähige Material (2) enthält.

5. Katzentoilette nach einem der vorangehenden Ansprüche, **dadurch gekennzeichnet, daß** die Vlieseinlage einen Superabsorber und eine über dem Superabsorber angeordnete kratzfeste Vliesschicht umfaßt.

6. Katzentoilette nach Anspruch 5, **dadurch gekennzeichnet, daß** oberhalb der kratzfesten Vliesschicht eine Schicht aus Streugut angeordnet ist.

7. Katzentoilette nach einem der Ansprüche 5 oder 6, **dadurch gekennzeichnet, daß** der Indikatorstreifen (1) zwischen dem Superabsorber und der kratzfesten Vliesschicht angeordnet ist.

8. Katzentoilette nach einem der vorangehenden Ansprüche, **dadurch gekennzeichnet, daß** das Indikatorfeld (3) mindestens einen Indikatorpunkt (4) umfaßt.

9. Katzentoilette nach einem der vorangehenden Ansprüche, **dadurch gekennzeichnet, daß** die Schutzhülle (5) im wesentlichen aus wasserdichtem Kunststoffmaterial gefertigt ist und an und/oder in dem absorptionsfähigen Material (2) befestigt ist.

10. Katzentoilette nach Anspruch 9, **dadurch gekennzeichnet, daß** die Schutzhülle mit Klebepunkten (7) an und/oder in dem absorptionsfähigen Material befestigt ist.

11. Katzentoilette nach einem der vorangehenden Ansprüche, **dadurch gekennzeichnet, daß** der Indikatorstreifen (1) im wesentlichen aus wasserdichtem Kunststoffmaterial ausgebildet ist.

12. Katzentoilette nach einem der vorangehenden Ansprüche, **dadurch gekennzeichnet, daß** der Indikatorstreifen (1) mit zumindest einer weiteren Fixierung (9) an dem absorptionsfähigen Material (2) befestigt ist.

13. Katzentoilette nach einem der vorangehenden Ansprüche, **dadurch gekennzeichnet, daß** der Indikatorstreifen (1) durch Herausziehen desselben über das absorptionsfähige Material (2) aktivierbar ist.

14. Katzentoilette nach einem der vorangehenden Ansprüche, **dadurch gekennzeichnet, daß** das Indikatorfeld (3) auf der dem Superabsorber zugewandten Seite des Indikatorstreifens (1) angeordnet ist.

15. Verfahren zum Bestimmen von Urinwerten einer Katze mit einer Katzentoilette nach einem der Ansprüche 1 bis 14, **dadurch gekennzeichnet, daß** ein Indikatorstreifen (1) zur Aktivierung desselben über die Vlieseinlage, insbesondere den Superabsorber, gezogen wird.

16. Verfahren nach Anspruch 15, **dadurch gekennzeichnet, daß** mit dem Indikatorstreifen (1) Urinwerte, wie Zucker- und Blutgehalte und dergleichen, bestimmt werden.

## Revendications

1. Toilettes pour chat (8), comportant au moins un matériau absorbant (2) comprenant un insert en un matériau non tissé et au moins une bande d'indicateur (1) destinée à déterminer le niveau de l'urine de chat et qui est agencée sur et / ou dans le matériau absorbant (2), **caractérisées en ce que** la bande d'indicateur (1) comprend au moins une zone d'indicateur (3) et une région permettant à l'utilisateur de manipuler la bande d'indicateur (1) et la zone d'indicateur (3) et **en ce que** l'état dans lequel elle est livrée au consommateur, elle est agencée à l'intérieur d'un couvercle de protection (5).

2. Toilettes pour chat selon la revendication 1, **caractérisées en ce que** les toilettes pour chat (8) consistent en un récipient avec une paroi latérale périphérique (10) qui est étanche sur tous les côtés dans l'état dans lequel il est livré au consommateur et qui contient un matériau absorbant (2) et qui est conçu d'une manière telle qu'il est ouvert avant utilisation et est jeté en totalité après l'utilisation.

3. Toilettes pour chat selon la revendication 2, **caractérisées en ce que** le récipient est un bloc replié.

4. Toilettes pour chat selon la revendication 1, **caractérisées en ce qu'**elles ont une partie inférieure et une poche remplaçable contenant le matériau absorbant (2) qui peut être placé dans la partie inférieure.

5. Toilettes pour chat selon l'une quelconque des revendications précédentes, **caractérisées en ce que** l'insert en matériau non tissé comprend un super absorbant et une couche résistant aux égratignures en matériau non tissé disposée sur le dessus du super absorbant.

6. Toilettes pour chat selon la revendication 5, **caractérisées en ce qu'**une couche de litière est disposée au dessus de la couche résistante aux égratignures en matériau non tissé.

7. Toilettes pour chat selon l'une des revendications 5 ou 6, **caractérisées en ce que** la bande d'indicateur (1) est disposée entre le super absorbant et la couche résistante aux égratignures en matériau non tissé.

8. Toilettes pour chat selon l'une quelconque des revendications précédentes, **caractérisées en ce que** la zone d'indicateur (3) comprend au moins un point indicateur (4).

9. Toilettes pour chat selon l'une quelconque des revendications précédentes, **caractérisées en ce que** le couvercle de protection (5) est composé sensiblement de matière plastique étanche à l'eau et est fixé sur et / ou dans le matériau absorbant (2).

10. Toilettes pour chat selon la revendication 9, **caractérisées en ce que** le couvercle de protection est fixé sur et / ou dans le matériau absorbant avec des points d'adhésif (7).

11. Toilettes pour chat selon l'une quelconque des revendications précédentes, **caractérisées en ce que** la bande d'indicateur (1) est sensiblement composée de matière plastique étanche à l'eau.

12. Toilettes pour chat selon l'une quelconque des revendications précédentes, **caractérisées en ce que** la bande d'indicateur (1) est fixée au matériau absorbant (2) par au moins un autre moyen de fixation (9).

13. Toilettes pour chat selon l'une quelconque des revendications précédentes, **caractérisées en ce que** la bande d'indicateur (1) peut être activée en la tirant vers l'extérieur sur le matériau absorbant (2).

14. Toilettes pour chat selon l'une quelconque des revendications précédentes, **caractérisées en ce que** la zone d'indicateur (3) est disposée du côté de la bande d'indicateur (1) faisant face au super absorbant.

15. Procédé de détermination du niveau de l'urine d'un chat en utilisant des toilettes pour chat selon l'une quelconque des revendications 1 à 14, **caractérisé en ce que** afin d'activer le bande d'indicateur (1), elle est tirée sur l'insert en matériau non tissé, en particulier le super absorbant.

16. Procédé selon la revendication 15, **caractérisé en ce que** la bande d'indicateur (1) est utilisée afin de déterminer des niveaux d'urine, ainsi que des teneurs en sucre et en sang et similaires.
